# EUROPEAN PATENT SPECIFICATION

(11) **EP 4 061 595 B1**
(45) Date of publication and mention of the grant of the patent: **07.05.2025**
(21) Application number: 20820577.3
(22) Date of filing: 23.11.2020
(51) Int. Cl.: B29C 49/22, C23C 4/18, C08J 7/18, B05D 7/02, B65D 23/08

(54) **CONTAINER WITH A COATING LAYER**
BEHÄLTER MIT EINER ÜBERZUGSSCHICHT
CONTENANT PRÉSENTANT UNE COUCHE DE REVÊTEMENT

(30) Priority: 22.11.2019 NL 2024298
(43) Date of publication of application: 28.09.2022
(73) Proprietor: Heineken Supply Chain B.V., 1017 ZD Amsterdam (NL)
(72) Inventor: BAX, Bart Jan, 1017 ZD Amsterdam (NL); HEYBERGER, Regis, 57100 Thionville (FR); SCHELTJENS, Gill, 2850 Boom (BE); BOREK-DONTEN, Joanna, 6700 Arlon (BE)
(74) Representative: V.O.
(86) International application number: PCT/NL2020/050735
(87) International publication number: WO 2021/101384

(56) References cited:
- EP-B1- 2 094 466
- WO-A1-2017/104250
- JP-A- 2019 131 253
- KR-A- 20140 127 835
- US-A1- 2007 087 131
- US-A1- 2012 306 126
- US-A1- 2015 352 779
- US-B2- 8 377 366

## Description

### BACKGROUND OF THE INVENTION

The invention is in the field of containers for foods and drinks, as well as to methods for preparing these containers, and to preforms used in these methods. In particular the present invention is directed to these methods and to containers and/or preforms for such containers with a coating layer applied thereon.

In the food and beverage industry, a wide variety of containers is used to keep the contents of the containers fresh.

Such beverage containers can be made of different materials. Owing to their light weight and strength, polymer materials, such as plastics, in particular thermoplastic materials, are often used for packaging foods and drinks. Suitable polymer materials for food and drinks containers are polyesters, such as polyethylene terephthalate (PET), polylactic acid (PLA), polyethylene 2,5-furandicarboxylate (PEF), and other widely available materials such as polypropylene (PP) and polyethylene (PE).

Containers made of thermoplastic polymers can be produced using blow molding. In this process, a preform for the container is produced, for instance by injection molding. Subsequently, a container is produced by reheating the preform using infrared radiation and stretching the reheated preform into its final shape, typically in a blow molding step (also referred to as stretch blow molding). Transporting empty containers is inefficient. Therefore, preforms for containers are often produced in one location and transported to the next location, where the preforms are blow-molded into their final dimensions and filled.

In view of waste reduction and environmental impact, it is desirable that containers can be recycled. Polymers such as PET, PP, and PE are already recycled to a great extent, and there is a good infrastructure for recycling such materials, which makes it convenient to dispose these materials in a responsible way. To maintain a high quality of recycled material, it is desired to use pure materials, *i.e.,* plastics that do not contain many other materials.

A special type of beverage containers is the bag-in-container. This type of container comprises an inner layer, *i.e.* an inner container, or bag, in which a fluid is contained, and an outer layer, *i.e.* an outer container, which provides the structural integrity to the bag-in-container. In order to empty the inner container, elevated gas pressure (vis-à-vis the atmospheric pressure) can be applied between the outer container and the inner container. This causes the fluid to be dispensed from the bag, without allowing gas to enter the bag, thereby keeping the contents of the container fresh. Bag-in-containers are used for instance in draught beer systems. Bag-in-containers can be produced by producing a preform comprising an inner layer, *i.e.* an inner preform and an outer layer, *i.e.* an outer preform, and integrally blow molding this double preform into a bag-in-container. During blow molding the inner layer of the preform is stretched to become the inner layer of the container, and the outer layer of the preform is stretched to become the outer layer of the container.

In view of recyclability, it is desirable that the inner and outer container of a bag-in-container are made from the same material.

It is important for proper functioning of bag-in-container systems that the inner container, or bag, delaminates from the outer container during use. This can be achieved by using different materials for the inner and outer container, that do not adhere well to each other. However, using different materials for the inner and the outer preform or container has disadvantages for recycling the container. Also integrally blow molding of the preforms comprising different materials into a bag-in-container can prove difficult, in particular because different materials typically have a different reheating behavior in infrared.

In the art, release agents are applied onto the inner preform to optimize delamination. Typically, release agents such as silicone and PTFE are applied, e.g. sprayed, on the outer surface of the inner preform. A disadvantage of using such release agents is that they have the tendency to flow over the surface, resulting in an uneven distribution of release agent over the surface of the inner preform, which may also result in parts of the surface not being covered at all by the release agent. In addition applying release agents may contaminate the surroundings, such as the machines used, and it may interfere with subsequent processing steps, such as welding, and the like.

Another approach to optimize delamination is to increase roughness of one of the preforms, by including metal flakes in the preform, which is described in WO2014077681. This approach can be used as an alternative to release agents. However, depending on the situation, it may still be advantageous to additionally apply release agent to the outside of the inner preform before blow molding to further promote the inner container releasing from the outer container more easily and in a controlled manner..

EP2148770 describes a bag-in-container made from an inner preform and an outer preform of the same material, wherein the inner and outer layers of the container release. Application of a release agent is advantageous in some cases.

The publications JP 2019 131253 A, WO 2017/104250 A1, US 2007/087131 A1, US 2012/306126 A1 and EP 2 094 466 B1 essentially disclose methods for applying a coating layer on a preform for a container, which methods comprise the steps of:
a) providing a low-energy, cold plasma,
b) exposing coating precursors and the preform to said plasma, thereby chemically activating the precursors, the preform, or both;
c) depositing a coating layer on at least part of the preform by reaction of the activated precursors with each other and/ or with the activated preform.

The publications KR 2014 0127835 A, US 2015/352779 A1 and US 8 377 366 B2 disclose methods of applying coating layers on films and labels using plasma generated using a dielectric barrier discharge.

An objective of the present invention is to provide containers having at least one surface treated, wherein the treatment is used for adding various functionalities to the container. Another objective of the present invention is to provide coated containers or preforms for containers, which coating can be used to add various functionalities to the container, without adding a large amount of extra material to the container, thereby maintaining good recyclability of the container.

### BRIEF SUMMARY OF THE INVENTION

In accordance with the invention there is provided a method for applying a coating layer on a preform for a container using plasma deposition in accordance with claim 1.

In addition, a method for producing a container is provided.

In accordance with another aspect, there is provided a preform for a container, comprising a coating layer applied using the method as described herein.

There is also provided a container comprising a coating layer obtainable by stretching of a preform as described herein.

The coating layer is applied to a preform for a container using a low-energy atmospheric plasma discharge, resulting in a coating layer which is preferably crosslinked and/or covalently grafted onto the surface of the preform. Surprisingly, the coating layer stays intact during blow molding, *i.e.* stretching of the preform into a container. Using the method described herein, very thin coating layers can be achieved.

Another aspect is the use of plasma deposition in the production of a container comprising a coating layer.

More specifically, the present invention seeks to improve containers or preforms therefor in one or more of the following aspects:
- improvement in view of release properties (in case of a bag-in-container), *i.e.* delamination of the inner layer from the outer layer, meaning that delamination of the inner layer from the outer layer prior, during or after the container-formation step (such as a blow stretch molding step) is improved and as controlled as possible;
- improvement in view of moisture pickup, leading e.g. to increased shelf-life of the containers or preforms therefor;
- improvement in view of heat transfer to the preform. This improves the formation of the container from the preform;
- improvement in view of colorability. This makes it possible to provide a color uniformly or on a localized place to a container;
- improvement in view of printability. This enables direct printing onto a container using well-known printing techniques;
- improvement in view of gas permeability. In particular with respect to undesired outflux of carbon dioxide, which is an important component for many beverages, such as beer, and with respect to undesired influx of oxygen (O₂), e.g. from the surrounding air, which may result in undesired degradation of the contained fluid;
- improvement in view of light transmission properties (visible or ultraviolet (UV) light). This avoids undesirable reactions to the contents of the containers, such as beer becoming lightstruck.

### BRIEF DESCRIPTION OF THE DRAWINGS

Figure 1 is a schematic representation of a preform for a container according to the invention.
Figure 2 is a schematic representation of a container according to the invention.
Figure 3 shows an example of TOF-SIMS (time-of-flight secondary ion mass spectrometry) analysis on a PET preform, on which a coating layer according to the invention is applied to the top half of the analyzed area. The detected ions are representative for the coating layer.
Figure 4 shows an example of TOF-SIMS analysis on a PET preform, on which a coating layer according to the invention is applied to the top half of the analyzed area. The detected ions are representative for PET.
Figure 5 shows an example of TOF-SIMS analysis on a container, which container was produced by blow molding of a preform with a coating layer according to the invention applied thereon. The detected ions are representative for the coating layer.

### DETAILED DESCRIPTION OF THE INVENTION

There is provided a method for applying a coating layer on a preform for a container, which method comprises the steps of:
a) providing a low-energy, cold plasma;
b) exposing coating precursors and the preform to said plasma, thereby chemically activating the precursors, the preform, or both;
c) depositing a coating layer on at least part of the preform by reaction of the activated precursors with each other and/or with the activated preform.

There is also provided a method for producing a container, which method comprises the method for applying a coating layer as described herein, followed by a stretching step.

A low-energy plasma is defined herein as a plasma of which the power density is high enough to activate the precursors and/or the preform, allowing a chemical reaction to take place, but low enough to prevent destruction of the precursors, the preform and/or the container. The power density may be in the range of 0.2 - 8 W/dm³, more preferably between 0.5 W/dm³ and 7 W/dm³, still more preferably between 0.8 W/dm³ and 6 W/dm³, yet more preferably between 1 W/dm³ and 5 W/dm³, even more preferably between 1.5 W/dm³ and 4 W/dm³, still even more preferably between 2 W/dm³ and 3 W/dm³, such as 2 W/dm³, 2.1 W/dm³, 2.2 W/dm³, 2.3 W/dm³, 2.4 W/dm³, 2.5 W/dm³, 2.6 W/dm³, 2.7 W/dm³, 2.8 W/dm³, 2.9 W/dm³, 3 W/dm³ or any value therebetween, most preferably in the range of 2.4W/dm³ to 2.6 W/dm³.

A cold plasma is defined herein as a plasma of which the temperature is sufficiently low to not melt or otherwise damage the precursor and/or preform that are exposed to said cold plasma. The temperature of the plasma may be 150 °C or lower, preferably 130 °C or lower, more preferably 100 °C or lower, yet more preferably 70 °C or lower, even more preferably 60 °C or lower, yet more preferably 55 °C or lower, still even more preferably 50 °C or lower, even yet more preferably 45 °C or lower. The temperature of the plasma may be as low as room temperature, *i.e.,* the temperature surrounding the plasma. Depending on the location where the coating process is carried out, room temperature may be in the range of 10-40 °C, preferably 15-30 °C, such as 20-25 °C. The temperature of the plasma will generally not be lower than room temperature. When depositing temperature sensitive coatings it is important to keep the temperature of the plasma steady at the optimal value. Depending on the type of precursor or precursor mixture and/or the pressure, the optimal temperature may be selected. Hence, in an embodiment the temperature of the plasma is selected taking into account the type of precursor, the precursor mixture and/or the plasma pressure.

The plasma of the present invention is an atmospheric plasma which has a pressure around ambient pressure. Such plasma is created and discharged typically at a pressure of between 400 and 1600 hPa, preferably at a pressure between 450 and 1400, even more preferably at a pressure between 500 and 1300 hPa, yet more preferably between 600 and 1250 hPa, even more preferably between 700 hPa and 1200 hPa, still more preferably between 800 hPa and 1150 hPa, yet more preferably between 900 hPa and 1100 hPa, most preferably about ambient pressure, which is typically about 1013 hPa. Pressure of the plasma can play an important role in the quality of the deposited layer. Some plasma precursors are sensitive to too low and/or too high plasma pressures compared to the atmospheric pressure, while other precursors provide a better coating at lower or higher plasma pressures. However, low-energy, cold plasma can typically be applied under reduced pressure of lower than 400 hPa down to vacuum, or increased pressure of more than 1600 hPa, both types requiring a pressure vessel to maintain such low or high pressures. The use of a plasma with pressures in the currently preferred ranges around the ambient pressure reduces costs and difficulties relating to maintaining pressure differences and pressure gradients.

A plasma with the conditions described above may be referred to as a soft plasma. The soft plasma may provide enough energy to activate the precursors, the preform, or both. This allows reactions, such as polymerization reactions to take place between the activated precursors, as well as between the activated precursors and the activated preform. At the same time, the conditions are mild enough to prevent destruction and/or loss of chemical function of the precursors. Therefore, a wide range of precursors may be used in the production of the coating layer. Even sensitive precursors such as antibodies may be activated using the soft, *i.e.,* low-energy, cold plasma.

The plasma is generated using a dielectric barrier discharge (DBD plasma), preferably under atmospheric conditions.

A coating layer as described herein is defined as a layer of a material of a different composition than the substrate onto which it is deposited, *i.e.,* the preform for a container.

The plasma chemically activates at least one of the precursor(s) and/or the preform for the container. This activation of the precursors and/or the preform may occur by opening of double molecular bonds, radical removal and/or ion formation. This allows and/or improves the reactions required to form the coating layer. These reactions may involve:
- reactions between precursors, such as polymerization reactions and crosslinking reactions, and/or
- reactions between precursors and the preform for the container, such as covalent bonding reactions.
This allows reactions, such as polymerization reactions to take place between the activated precursors, as well as between the activated precursors and the activated preform or container.

Preferably, the coating layer is covalently bound to the surface. Preferably the coating layer comprises crosslinks and the coating layer comprises covalent bonds with the preform or the container. Such crosslinks and covalent bonds are believed to be responsible for, or at least to improve, the structural integrity of the coating. If the coating is applied to a preform which is later on in the process increased in size, *e.g.* by stretch blow molding, the crosslinks and covalent bonds between the coating layer and the preform prevent the coating layer from being damaged, even when the preform is stretched.

Using the method as described herein, the coating layer stays intact when the preform is stretched, for instance during blow molding, including stretch blow molding. Without wishing to be bound by theory, it is believed that crosslinks between the molecules and covalent bonds between the coating layer and the preform prevent the coating layer to be damaged, even when the preform is stretched.

Preferably, the preform comprises a thermoplastic material, allowing the preform to be moldable at elevated temperatures. In embodiments, the thermoplastic material comprises one or more selected from the group consisting of polyethylene terephthalate (PET), polyethylene (PE), polypropylene (PP), polyethylene 2,5-furandicarboxylate (PEF), polyethylene naphthalate (PEN), and polylactic acid (PLA).

Suitable precursors may comprise at least one moiety selected from the group comprising alkane, alkene, alkyne, benzene derivatives, haloalkane, fluoroalkane, chloroalkane, bromoalkane, iodoalkane, alcohol, ketone, aldehyde, acyl halide, carbonate, carboxylate, carboxylic acid, ester, methoxy, hydroperoxide, peroxide, ether, hemiacetal, hemiketal, acetal, ketal, orthoester, heterocycle, orthocarbonate ester, amide, amines, imine, imide, azide, azo compound, cyanates, nitrate, nitrile, nitrite, nitro compound, nitroso compound, oxime, pyridine derivate, thiol, thioether, disulfide, sulfoxide, sulfone, sulfinic acid, sulfonic acid, sulfonate ester, thiocyanate, thioketone, thial, thioester, phosphine, phosphonic acid, phosphate, phosphodiester, boronic acid, boronic ester, borinic acid, borinic ester, silane and combinations thereof. Preferably, the at least one moiety is chosen from the group comprising alkane, alkene, alkyne, alcohol, silane and combinations thereof.

In a preferred embodiment the precursors are selected from the group consisting of acetylene, tetraethyl orthosilicate (TEOS), cis-butene-1,4-diol, anti-bodies, polypeptides, precursors for protection against light in the UV and visible region, and combinations thereof. These substances allow for a significant reduction of the moisture uptake rate, but may also provide further functionalities to the preform or container.

Alternatively, or additionally, the precursors can be selected from the group consisting of fluoro-acrylate monomers, fluoroalkyl acrylate monomers, fluoro-methacrylate monomers, fluoro-alkyl methacrylate monomers, fluoro-silane monomers, and combinations and derivatives thereof, and cyclosiloxanes. Preferably, the coating layer is derived from a first precursor comprising fluoro-acrylate monomers, fluoroalkyl acrylate monomers, fluoro-methacrylate monomers, fluoro-alkyl methacrylate monomers, fluoro-silane monomers, or a combination or derivatives thereof, and a second precursor comprising cyclosiloxanes.

A coating layer which is produced from the above-mentioned precursors may result in a preform with a moisture uptake coefficient lower than 0.050 wt.% per week, relative to the weight of the preform. As a result, the shelf-life of the preform improves considerably, for instance with four weeks or more. This functionality may be achieved using a thin coating layer, which does not give a preform an impression that it is faulty or contaminated.

In an embodiment of the invention, the precursors comprise one of the above list of suitable precursors. However, in other embodiments, the precursors comprise two or more of the above list of suitable precursors. In a preferred embodiment a method is provided wherein the coating layer is created using at least two precursors, wherein at least one of said precursors is suitable to act as a light-barrier, specifically against ultraviolet (UV) and visible light. By combination of at least two precursors, the coating layer may have more than one functionality, such as reduced moisture uptake, as well as protection against UV/visible light. In addition or alternatively, combining two or more precursors may lead to improved functionalities, such as obtaining an even higher reduction of the moisture uptake coefficient, which could result in moisture uptake coefficients as low as 0.030 wt.% per week or less, relative to the weight of the preform.

The coating layer may act as a barrier against gases. Preferably, the coating layer acts as a barrier against oxygen (O₂) and/or carbon dioxide (CO₂). Migration of gases such as O₂ towards the inside of a container may cause degradation of the contents of the container. Outward migration of gases such as CO₂ may also result in a decrease in quality of the contents, for example in the case of carbonated drinks.

In a preferred embodiment of the invention, the coating layer imparts one or more functionalities to the preform for a container. Since the coating layer stays intact upon stretching of the preform into a container, the functionalities imparted by the coating layer may be present both on the preform before stretching, and on the container, after performing the stretching step. Such functionalities may be related to one or more of the following properties:
- surface tension properties, which may result in *e.g.* hydrophobicity, reduced moisture uptake, improved release properties, improved slip properties, improved release of viscous liquids, and/or improved printability of the surface;
- barrier properties, against e.g. permeation of gases, such as O₂ and/or CO₂, as well as against other undesired chemicals;
- optical properties, e.g. addition of color or fluorescence, and/or providing a barrier against ultraviolet or visible light;
- reheat properties;
- strength of the preform, e.g. improved stress cracking resistance.

The functionality of the coating layer is at least partially determined by the type of precursors which are used to make the coating layer. Table 1 summarizes which precursor types and/or specific precursors may be used in order to impart certain functionalities, as observed in experiments by the inventors.

**Table 1.**

| **Functionality** | **Precursor types** | **Tested precursors** |
|---|---|---|
| a reduced moisture uptake | Fluorocarbons, siloxanes, fatty acids, hydrocarbons | perfluorodecanoic acid (PFDA), hexamethyldisiloxane (HMDSO), tetraethyl orthosilicate (TEOS), vinyltriethoxysilane (VEOS), tetravinyltetra-methylcyclotetrasiloxane (V4D4), nonanoic acid, nonene, dodecane |
| b. improved delamination of inner and outer preforms | Fluorocarbons, siloxanes, polymer solutions | PFDA, ethylene vinyl alcohol (EVOH) |
| c. improved reheat properties | Metal nanoparticles, carbon nanoparticles, conductive polymers | Au, carbon nanotubes (CNTs), polyaniline, polythiophene |
| d. improved slip properties | Fluorocarbons, siloxanes, glycols, hydrocarbons, fatty acids | PFDA, HMDSO, poly(ethylene glycol) methyl ether acrylate (PEGMEA), di(ethylene glycol) ethyl ether acrylate (DEGEA) |
| e. added color and/or other optical properties | Acrylic inks, UV tracer solutions | acrylic inks (e.g. available from STS^{™}), rhodamine, tartrazine, fluorescein, uranin (e.g. available from Radiant^{™} UV tracers) |
| f. improved CO₂ barrier properties | Siloxanes, polymer solutions | HMDSO, VEOS, EVOH |
| g. improved O₂ barrier properties | Siloxanes, polymer solutions | HMDSO, VEOS, V4D4, EVOH |
| h. improved light barrier properties | UV light absorbers, conjugated aromatic molecules, Hindered amine light stabilizers, inorganic oxides | TiO₂, Tinuvin^{®} light stabilizers |
| i. limited migration of undesired chemicals arising in the preform material to the contents of the container | Siloxanes | HMDSO |
| j. improved internal anti-stick properties | Fluorocarbons, glycols | PFDA, PEGMEA, CAS 116-143, CAS 116-15-4, DEGEA |
| k. improved direct object printability | Acrylates, methacrylates, hydroxyl groups, epoxy groups | AA, methyl methacrylate (MMA), hydroxyethyl methacrylate (HEMA), HEAA, Glycidyl methacrylate (GLYMA) |
| l. improved stress cracking resistance | Polymer solutions, siloxanes | EVOH, HMDSO, vinylmethoxysiloxane (VMOS), PFDA, nonene |

The different functionalities that can be imparted by the coating layer are discussed in more detail below.

### a. Reduced moisture uptake

One function of a coating layer may be to reduce the moisture uptake rate of a coated preform, prior to increasing the preform to a full-sized container, e.g. by stretch blow molding.

When a surface of the preform is coated, the plasma deposited coating layer can result in a preform with a better stretch blow molding ability compared to the currently employed methods. In a production process reproducibility is extremely important. Better stretch blow molding ability allows to increase the reproducibility of the production of plastic containers from preforms.

As indicated above, the coating layer may result in a reduction of the moisture uptake rate, thereby improving the shelf-life of the preform. Increased storage time is advantageous for several reasons. The production of the containers from preforms, whereby the preforms are produced in a separate process, can be hampered due to many different reasons, e.g. breakdown of one or more machines, national holidays whereby the factory has to close down for one or more weeks, striking employees, etc. Also, the preforms may need to be transported over long distances with long travelling times, *e.g*. by overseas shipment. In these cases, the preforms which are close to their expiration date could be already expired by the time containers are produced from the preforms. Thus both time and cost efficiency of the whole production process may be reduced. In many cases, by employing a correct management system, these problems could be avoided. However, in some cases, *e.g*. due to unexpected circumstances, mismanagement, or human mistakes, expiration of the preforms is unavoidable. In these cases it would be advantageous if the shelf-life of the preforms was increased. Improving the shelf-life of the preforms could also unlock or strengthen the possibility to produce the preforms at other locations than the locations used for the production of the plastic containers. This could especially be advantageous if for some reason the production of the preforms is located on the other side of the world compared to the production of the containers. Further, increasing the shelf-life of the preform enhances the possibility to perform the production of the preforms and the production of the containers by different manufacturers. This could be financially beneficial and/or beneficial for technological development. The separation of manufacturers may result in a better and/or faster further development of the manufacturing process. Since the preforms tend to be significantly smaller than the containers, transportation of preforms is easier and less expensive than transportation of containers. Hence, it tends to be more cost effective to produce preforms in a specialized facility, and to transport these preforms to a second facility where the containers are produced, and possibly also filled and prepared for consumption.

The moisture uptake rate may already be reduced considerably if only part of the complete surface the preform is treated. For instance, if only the outer surface is treated, the uptake rate could be approximately halved, and, if the preforms are sealed off from the environment, the moisture uptake rate could be reduced by a factor of 10 or more.

In a preferred embodiment, the preform has a moisture uptake coefficient lower than 0.070 wt.% per week relative to the weight of said preform, preferably lower than 0.050 wt.% per week relative to the weight of the preform, even more preferably lower than 0.040 wt.% per week relative to the weight of the preform, most preferably lower than 0.030 wt.% per week relative to the weight of the preform. The currently available methods for the reduction of moisture uptake rate obtain a preform with a moisture uptake coefficient higher than 0.070 wt.% per week relative to the weight of said preform. In order to increase the shelf-life of the preform, the inventors have found that the moisture uptake coefficient has to be lower than 0.070 wt.% per week relative to the weight of said preform. A moisture uptake coefficient lower than 0.050 wt.% per week relative to the weight of said preform further increases the shelf-life of the preform. The present inventors have noticed that by decreasing the moisture uptake coefficient to below 0.070 wt.% per week relative to the weight of said preform, the preform validity increased with a minimum of four weeks. The further reduction of the moisture uptake coefficient, resulted in an even higher minimal increase of the shelf-life. The present inventors noted that the reduction of the moisture uptake coefficient to below 0.030 wt.% per week relative to the weight of the preform increased the shelf-life by more than twelve weeks.

In an embodiment, the precursors comprise fluorocarbons, siloxanes, fatty acids and/or hydrocarbons, or any combination thereof, preferably PFDA, HMDSO, TEOS, VEOS, V4D4, nonanoic acid, nonene, dodecane, or any combination thereof. Reduction of the moisture uptake rate has been experimentally observed for such precursors.

### b. Improved delamination of inner and outer layers

This is particularly important at the stretch blow molding infeed, *e.g*. when manufacturing a bag-in-container.

In an embodiment, the precursors comprise fluorocarbons, siloxanes, polymer solutions or any combination thereof, preferably PFDA, EVOH or any combination thereof. Improved delamination has been experimentally observed for such precursors.

### c. Improved reheat properties

This is particularly important to improve stretch blow molding processability.

In an embodiment, the precursors comprise metal nanoparticles, carbon nanoparticles, conductive polymers or any combination thereof, preferably Au, CNTs, polyaniline, polythiophene or any combination thereof. Improved heat absorption has been experimentally observed for such precursors.

### d. Improved slip properties

This is particularly important to improve processes wherein the preforms and/or containers are conveyed in *e.g.* a filling line.

In an embodiment, the precursors comprise fluorocarbons, siloxanes, glycols, hydrocarbons, fatty acids or any combination thereof, preferably PFDA, HMDSO, PEGMEA, DEGEA or any combination thereof. Improved slip between containers has been experimentally observed for such precursors.

### e. Added color and/or other optical properties

This is particularly important for traceability, anti-counterfeiting or other desired functions.

In an embodiment, the precursors comprise one or more acrylic inks, UV tracer solutions or any combination thereof, preferably STS inks, radiant UV tracers or any combination thereof. Smooth coloring of the preform or container has been experimentally observed for such precursors.

### f. Improved CO₂ barrier properties

In an embodiment, the precursors comprise siloxanes, polymer solutions or any combination thereof, preferably HMDSO, VEOS, EVOH or any combination thereof. Improved CO₂ barrier properties have been experimentally observed for such precursors.

### g. Improved O₂ barrier properties

In an embodiment, the precursors comprise siloxanes, polymer solution or any combination thereof, preferably HMDSO, VEOS, V4D4, EVOH or any combination thereof. Improved O₂ barriers have been experimentally observed for such precursors.

### h. Improved light barrier properties

This is particularly important against visible light and/or against UV light.

In an embodiment, the precursors comprise UV light absorbers, conjugated aromatic molecules, hindered amine light stabilizers, inorganic oxides or any combination thereof, preferably TiO₂, Tinuvin ^{®} families or any combination thereof. Improved light barriers have been experimentally observed for such precursors.

### i. Limited migration of undesired chemicals arising in the preform material to the contents of the container

Undesired chemicals may migrate from the material of the container to the liquid in the container, such as acetaldehyde being formed in PET materials which could change the smell and taste of the liquid contents of the container. In this respect the present invention also aims at providing scavenging functionalities.

In an embodiment, the precursors comprise siloxanes or any combination thereof, preferably HMDSO or any combination thereof. Limited migration of undesired chemicals has been experimentally observed for such precursors.

### j. Improved internal anti-stick properties

This is particularly important for easy-release of viscous products such as mayonnaise, ketchup, syrups, etc., whereby the coating is applied on at least the inner surface of the preform and/or container.

In an embodiment, the precursors comprise fluorocarbons, glycols or any combination thereof, preferably PFDA, PEGMEA, CAS 116-143, CAS 116-15-4, DEGEA or any combination thereof. Internal anti-sticking has been experimentally observed for such precursors.

### k. Improved direct object printability

In an embodiment, the precursors comprise acrylates, methacrylates, hydroxyl groups, epoxy groups or any combination thereof, preferably AA, MMA, HEMA, HEAA, GLYMA or any combination thereof. Improved direct printing has been experimentally observed for such precursors.

### l. Improved stress cracking resistance

In an embodiment, the precursors comprise polymer solutions, siloxanes or any combination thereof, preferably EVOH, HMDSO, VMOS, PFDA, nonene or any combination thereof. Improved stress cracking resistance has been experimentally observed for such precursors.

The above functionalities may be desired for the complete preform or container, but may also be desired or needed only on a portion of the preform or container. Moreover, different portions of the container may be desired to have different functionalities, or a different combination of functionalities. Hence, in embodiments of the present invention, different coatings may be applied on different portions of the preform and/or container. In other embodiments, the plasma coating can be deposited on at least one section or over the whole surface of the preform.

Different precursors may be deposited using a layer by layer deposition strategy, whereby in each consecutive deposition step one precursor is deposited as a layer onto at least one section of or onto the whole surface of the preform. Another possibility includes depositing one or more layers comprising a mixture of different precursors, whereby the deposition is achieved by introducing the different precursors simultaneously into the plasma. A person skilled in the art will note that any combination of the deposition possibilities mentioned in this document could be applied in order to obtain a coating with a least two different precursors.

The functionality of the coating layer may significantly depend on the conditions, *e.g.* temperature and pressure, in which the coating layer is deposited. In order to obtain good functionality, it is important to work at optimal conditions, which can be different for each used precursor, although always in the preferred ranges specified in this document.

In addition, there is provided a preform for a container comprising a coating layer applied using the method as described herein. Preferably, the preform comprises a coating layer obtainable by the method as described herein.

Preferably, the coating layer that is applied using and/or obtainable by the method as described herein is crosslinked.

Additionally or alternatively, the coating layer that is applied using and/or obtainable by the method as described herein is covalently grafted onto the preform for a bag-in-container.

There is also provided a container comprising a coating layer, obtainable by stretching of the preform as described herein.

In an embodiment of the invention, the container is obtainable by blow molding of the preform.

The use of plasma deposition for applying a coating layer for *e.g.* the reduction of moisture pickup provides a means to control the coating deposition process down to a nanoscale precision. Thickness control is important, because the deposition of a too thick layer could result in an ostensibly visible coating. Ostensibly visible coatings could give an impression of a faulty or contaminated preform, and are as such undesired. Note that in the context of the present document, the coating may produce visible effects such as coloring or a smooth appearance. However, it is an advantage of the present invention that such effects do not appear to be the result of a coating.

The coating layer deposited on the preform may have a thickness of between 5 and 600 nm, preferably between 5 and 500 nm, more preferably between 10 and 500 nm, even more preferably between 10 and 300 nm, yet more preferably between 10 and 200 nm, still more preferably between 10 and 80 nm, such as 10 nm, 20 nm, 30 nm, 40 nm, 50 nm, 60 nm, 70 nm, 80 nm or any value therebetween, most preferably about 20 nm. The plasma coating thickness can be well-controlled by controlling the exposure time of the preform or container to the plasma and/or the precursors.

In an embodiment of the invention, the container is obtainable by integrally stretching the preform, wherein the stretch ratio is 2-20. Preferably, the stretch ratio with respect to volume is between 5 and 20, more preferably between 10 and 15, still more preferably between 12 and 15, such as 12, 13, 14, 15 or any value there between, most preferably about 13.5. Preferably, said preform increases in length with a stretching ratio of 2 to 20, preferably 3 to 15, more preferably 4 to 12, even more preferably 5 to 10, and/or said preform increases in diameter with a stretching ratio of 2 to 20, preferably 3 to 15, more preferably 4 to 12, even more preferably 5 to 10. During the step of increasing the size of the preform, the length, diameter and/or volume are increased in accordance with the above-mentioned ranges. The thickness of the coating layer decreases with the increase of the stretch ratio. It is believed that the thickness of the coating on the preform decreases inversely proportional to the increase in surface. As the shape of the preform may change during the increase in size, the theoretical inverse proportionality of the thickness reduction to the volume stretching ratio to the power 2/3 does not necessarily hold. Preferably, the thermoplastic preforms are stretched in length as well as in diameter during integral stretching.

After stretching, the coating layer on the container may have a thickness of 100 nm or less. Preferably, the coating layer has a thickness of 80 nm or less, more preferably 50 nm or less, such as 20 or less. The thickness of the coating layer after stretching may be as low as 5 nm, but is preferably more. In an embodiment, the thickness of the coating layer on the container is 30 nm or less, more preferably 25 nm or less, still more preferably 20 nm or less, yet more preferably 15 nm or less, even more preferably 10 nm or less, such as 10 nm, 9 nm, 8 nm, 7 nm, 6 nm, 5 nm, 4 nm, 3 nm, 2 nm, 1nm or any value there between, most preferably about 6 nm. Preferably the coating on the container is at least 2 nm thick.

Because of the low thickness of the coating layer, only a small fraction (e.g. less than 1 wt.%) of the total amount of material of the preforms and containers according to the invention are coating material. Because of this, the coated preforms and containers can be recycled well, without negatively affecting the quality of the recycled material.

In embodiments, the preform may be a preform for a bag-in-container, comprising an inner preform and an outer preform with facing surfaces, wherein at least one of the facing surfaces is coated with a coating layer applied using the method described herein. In that case, the coating layer may be applied to one or more of the following surfaces: the inside of the inner preform, the outside of the inner preform, the inside of the outer preform, and the outside of the outer preform. Preferably, the coating layer is applied at least to the outside of the inner preform, the inside of the outer preform, or both. In principle, the coating layer can be applied on part of these surfaces, or on these surfaces in their entirety. Preferably, the coating layer is applied on the surfaces in their entirety. In that way, the surface properties of the inner and/or outer surfaces, of the preform or container onto which the coating layer is applied are determined mainly by the properties of the coating layer.

Preferably, the coating layer is intact. An intact coating layer is defined as a coating layer which covers the entire surface onto which it was applied. Therefore, the coating layer is without regions where the material of the surface onto which the coating layer was applied is exposed. In that way, the surface properties, such as delamination properties, of the preform or container onto which the coating layer is applied are determined by the properties of the coating layer. Preferably, the coating layer stays intact during stretching of the preform, resulting in an intact coating layer on the container.

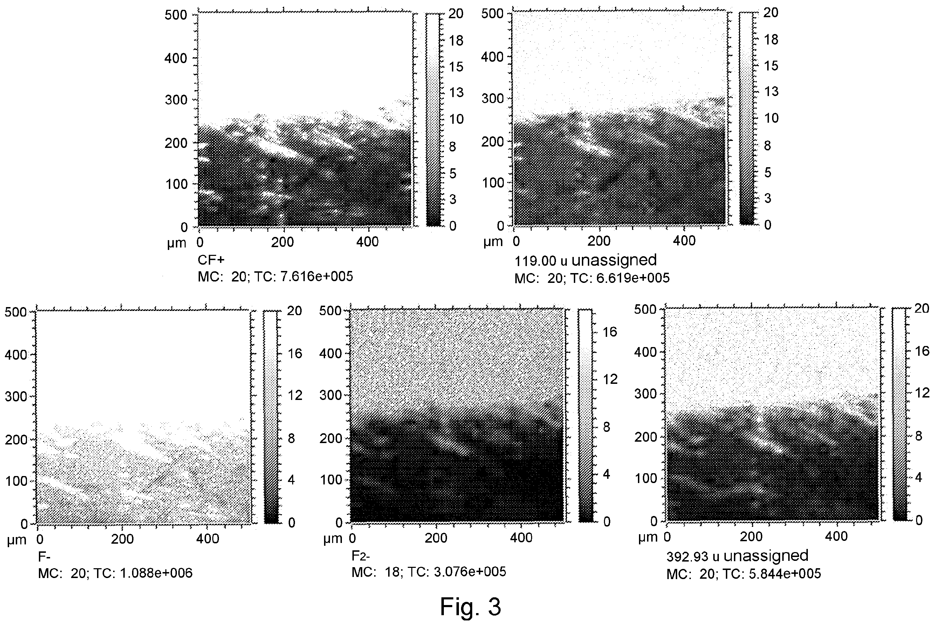

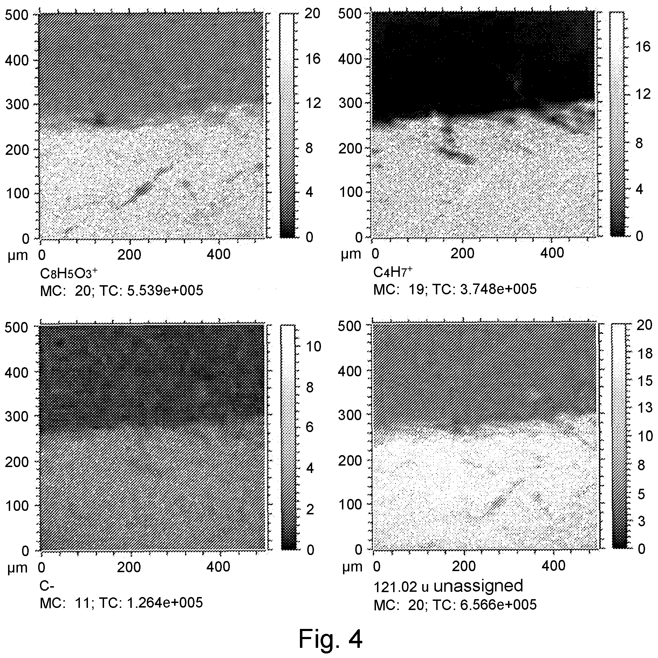

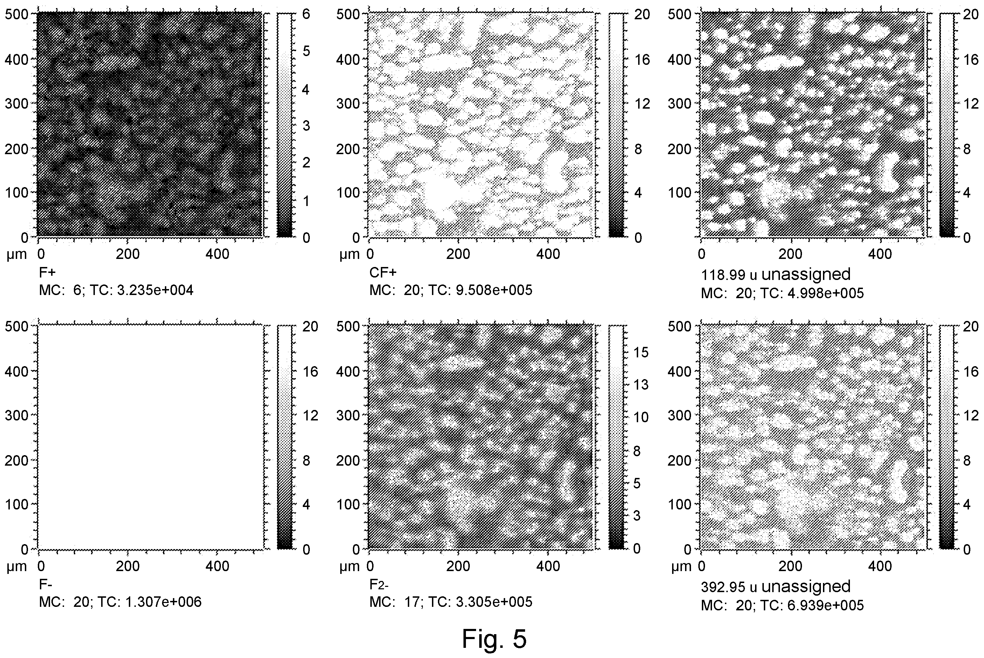

In order to confirm the presence of the intact coating layer with a thickness according to the invention, surface techniques, such as time of flight secondary ion mass spectrometry (TOF-SIMS), may be applied, as shown in figures 3-5.

In accordance with the invention the coating layer is applied on at least a part of a surface. Depending on the application, certain parts of the surface may intentionally remain uncoated. For example, in case delamination properties are to be improved, it is not required to coat the neck portion of a preform to be used in preparing the bag-in-container, since this neck portion normally does not deform during blow molding.

Alternative methods of characterization of the coating layer may include optical measurements. Since a wide variety of precursors can be used to form the coating layer, optically active components such as pigments or dyes may also be incorporated into the coating layer. These optically active components may be detected using optical detection methods. For example, when fluorescent materials are incorporated in the coating layer, the presence of an intact coating layer may be demonstrated using fluorescence measurements. In a preferred embodiment a coloring agent such as a pigment or a dye, is added to the plasma, preferably as a gas or a liquid or as a powder dissolved in a liquid or colloidal mixes in the form of an aerosol. Coloring allows an easier quality check by visible inspection, but may also be used for other visual effects. For example, when fluorescent materials are incorporated in the coating layer, the presence of an intact coating layer may be demonstrated using fluorescence measurements. Additionally, if the intention is to provide a direct printing onto the container later on, providing the coloring agent already to the plasma may provide a more even background color in an easier and faster manner than a coloring process on top of the coating.

Preferably the coating layer is a conformal coating layer. Such a conformal layer follows the surface closely, even in case the surface comprises large curvatures, *e.g*. near the opening, near a neck or near the bottom of the preform or container.

In case of a preform for a bag-in-container, the inner preform and outer preform of a preform may be formed of the same and/or of different materials. The coating layer which is applied on the outside of the inner preform and/or the inside of the outer preform may prevent contact between the material of the inner preform and the material of the outer preform. In that case, the same material of the inner preform and of the outer preform will not be in contact. Instead, when the coating layer is present on at least one of the facing surfaces, delamination properties depend on the interaction between the coating layer and the other facing surface, or on the interaction between the two coating layers. In this way, the coating layer may optimize delamination of the inner and outer layers, *e.g*. prior to, during, and/or after blow molding.

In case the preform is made up of multiple preforms, *e.g*. in the case of a preform for a bag-in-container, such a preform may be formed by joining two or more superposed preforms, *i.e.,* an inner preform and an outer preform, using methods known in the art. Non-limiting examples of such methods include spin welding of the inner and outer preforms, as described for instance in EP2885241. In order to achieve joining of the preforms there may be regions, such as the neck region, where contact between the inner and outer preform is deliberately made. It should be noted that a preform for a bag-in-container wherein the same material of the inner preform and the outer preform are not in contact with each other as described hereinabove does not preclude that contact between the inner and outer preform is deliberately made in specific regions such as the neck region of the preform for a bag-in-container, in order to achieve the required structural integrity.

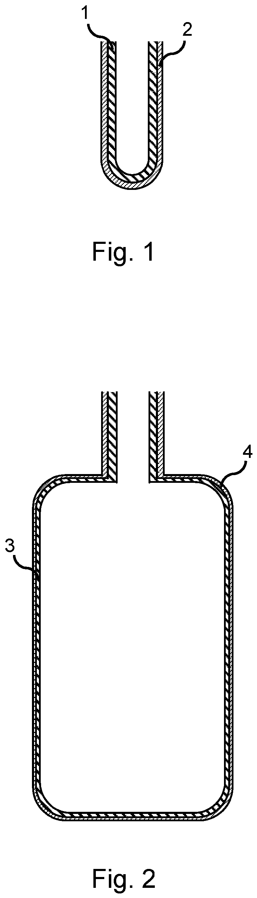

Figure 1 is a schematic representation of a cross-section of a preform for a container according to the invention. With reference to figure 1, there is provided preform for a container (1), comprising a coating layer (2). In figure 1, the coating layer is present on the outside of the preform. Alternatively, or in addition, the coating layer may be present on the inside of the preform.

Figure 2 is a schematic representation of a cross-section of a container obtainable by blow molding of preform (1), showing container (3), comprising coating layer (4). In figure 2, the coating layer is present on the outside of the container. Alternatively, or in addition, the coating layer may be present on the inside of the container.

In embodiments, the coating layer as described herein may have a low surface energy. A coating with a low surface energy may serve different functionalities, including but not limited to reduced moisture pickup and improved delamination of the inner and outer layers. A coating layer with low surface energy may also be referred to as a hydrophobic coating layer. Preforms are often produced in one location and blow molded into containers a different location, for instance in the same location where the blow molded containers are filled. This drastically reduces the transportation volume compared to when the blow molded containers were to be transported. However, preforms may have a limited shelf-life, and after a certain period, the blow molding properties of the preform may decrease. It has been found that preforms with a coating layer with low surface energy have an increased shelf-life. This also applies to a container having a hydrophobic coating. Low surface energy and/or hydrophobicity may be expressed in terms of water contact angle.

In a preferred embodiment, the coating layer is hydrophobic. The preferred contact angle may be 90° or higher, preferably 100° or higher, more preferably 120° or higher, such as 150° or higher. When the water contact angle is 150° or higher, the coating layer may be referred to as superhydrophobic. In a preferred embodiment, the coating layer is superhydrophobic.

Surprisingly, the hydrophobic coatings applied in accordance with the present invention do not have to result in a change of the color in the product. Such color changes are commonly observed in prior art other methods to improve shelf-life, such as the use of a scavenger or applying a water-resistant layer onto the inner and/or outer surface of a preform.

During use of a bag-in-container, elevated gas pressure (vis-à-vis the atmospheric pressure) is typically applied between the outer container and the inner container, causing the fluid to be dispensed from the bag, without allowing gas to enter the bag, thereby keeping the contents of the container fresh. For proper functioning during use, it is important that the inner container, or bag delaminates from the outer container.

In an embodiment related to bag-in-containers, the inner container delaminates from the outer container after integrally blow molding of the preform for a bag-in-container in a controlled manner.

Another aspect of the invention is the use of plasma deposition for the production of a container comprising a coating layer.

The invention is further described by the following non-limiting examples which further illustrate the invention, and are not intended to, nor should they be interpreted to, limit the scope of the invention.

### EXAMPLES

### Example 1: coating integrity

To test the homogeneity of the coating and the coating integrity, also after blow stretching the preform to a full sized container, two single wall preforms were provided. The preforms were made by injection molding a combination of PET particles and a silver colorant, resulting in preforms having a dark greyish color. This color helped to better spot the effects of the coating.

Preform 1 was not treated and was used as a reference. Preform 2 was treated with a plasma coating in accordance with the invention. During the coating process of the preform, a green pigment was added to the plasma via an aerosol.

The preforms were subsequently inflated via the preform opening by blow stretching to a full sized bottle with a ratio of approximately 11.

The reference bottle obtained from preform 1 ("bottle 1") showed small defects near the top at the so-called "Lamello"-" area around the opening, which is a stiffened ring or series of rings, extending around the periphery of the container and which results from increased crystallization in the preform, and near the bottom around the injection point of the preform. Both defects are typical of the blow stretching process. Bottle 1 had a light greyish color with small intensity fluctuations near the two defects.

The bottle obtained from preform 2 ("bottle 2") showed a smooth and even light green color all over the bottle (except for the same kind of intensity fluctuations near the defects). The homogeneous light-green color of bottle 2 indicates that the coating remains intact after inflating the preform by a volume ratio of as much as 11. The color pigment is well-distributed all over the bottle and the coating adheres very well to the complete surface of the preform and bottle.

### Example 2: surface energy

The coating on the preform and the resulting container can serve multiple purposes. It may for instance act as a moisture barrier, which can avoid degradation of the preform during storage. It may also act as a moisture barrier for the container. Other effects include to provide color (by adding a pigment, for instance by adding it to the plasma as demonstrated in the previous Example).

Also a release coating can be applied in accordance with the present invention, ensuring that an inner container easily delaminates from an outer container of a double-walled container (e.g. bag-in-container).

The delamination is greatly reduced if the surface energy is reduced. Especially also the release is better controlled, at a predetermined pressure level. However, plasma treatments without coating tend to increase the surface energy. The inventors have found that the surface energy is nevertheless reduced if at least one precursor is administered in a plasma as a gas or a liquid in the form of an aerosol.

To test the surface energy reduction, two preforms were prepared, both comprising PET with a silver colorant for providing an easy background color when using a pen test described below.

Preform 1 remained untreated, whereas preform 2 was provided with a coating according to the present invention.

The surface energy of the preforms was tested using a set of test pens having different types of ink, each type of ink having well-calibrated surface energies. If the surface energy of the substrate is equal to or higher than the surface energy of the ink, the ink will expand on the surface, resulting in smooth and even coloring. If the surface energy of the substrate is lower than the surface energy of the ink, the ink will conglomerate in inhomogeneous droplets.

Both preforms were subjected to three test pens, having surface energies of 34 mN/m, 38mN/m and 44mN/m, respectively. It was found that the untreated preform 1 had a surface energy of between 38 and 44 mN/m, consistent with the general assumption that PET has a surface energy between 40 and 50 mN/m, making it difficult to paint and requiring more force for delamination.

The treated preform had a surface energy of less than 34 mN/m, which resulted in improved delamination when used for instance in a double-walled container (such as a bag-in-container).

This Example shows that the surface energy can be reduced using a plasma with precursors. However, the inventors have also noted that certain types of precursors may increase the surface energy of the coated surface. Such higher surface energy may be preferred to obtain other functionalities, in particular improving direct printability (resulting in accurate, high-quality printed images).

## Claims

1. Method for applying a coating layer on a preform for a container, which method comprises the steps of:
a) providing a low-energy, cold plasma, wherein the plasma is an atmospheric plasma that is created and discharged at a pressure of between 400 and 1600 hPa, and wherein the plasma is generated using a dielectric barrier discharge;
b) exposing coating precursors and the preform to said plasma, thereby chemically activating the precursors, the preform, or both;
c) depositing a coating layer on at least part of the preform by reaction of the activated precursors with each other and/or with the activated preform.

2. Method according to claim 1, wherein the coating layer is covalently grafted onto the preform.

3. Method according to claim 1 or 2, wherein the coating layer is crosslinked, such that the layer stays intact when the preform is stretched.

4. Method according to any one of claims 1-3, wherein the preform comprises a thermoplastic material.

5. Method according to claim 4, wherein the thermoplastic material comprises one or more selected from the group consisting of PET, PLA, PEF, PEN, PP and PE.

6. Method according to any one of claims 1-5, wherein the coating layer provides the preform with hydrophobic properties.

7. Method according to claim 6, wherein said hydrophobic properties are imparted by a coating layer derived from a first precursor comprising fluoro-acrylate monomers, fluoroalkyl acrylate monomers, fluoro-methacrylate monomers, fluoro-alkyl methacrylate monomers, fluoro-silane monomers, or a combination or derivates thereof, and a second precursor comprising cyclosiloxanes.

8. Method according to any of the previous claims wherein the coating layer is applied on the entire surface of said preform.

9. Method for producing a container, which method comprises the method according to any one of claims 1-8, followed by a stretching step.

10. Use of plasma deposition using a low energy, cold plasma implementing the method according to any of the claim 1-9, wherein the plasma is an atmospheric plasma that is created and discharged at a pressure of between 400 and 1600 hPa, and wherein the plasma is generated using a dielectric barrier discharge, for the production of a container comprising a coating layer.

## Patentansprüche

1. Verfahren zum Auftragen einer Überzugsschicht auf einen Vorformling eines Behälters, wobei das Verfahren die Schritte umfasst von:
a) Bereitstellen eines niedrig-energetischen, kalten Plasmas, wobei das Plasma ein atmosphärisches Plasma ist, das hergestellt und bei einem Druck von zwischen 400 und 1600 hPa entladen wird, und wobei das Plasma unter Verwendung einer dielektrischen Barriereentladung erzeugt wird;
b) Exponieren von Überzugsvorläufern und des Vorformlings dem Plasma, wodurch die Vorläufer, der Vorformling oder beide chemisch aktiviert werden;
c) Abscheiden einer Überzugsschicht an mindestens einem Teil des Vorformlings durch Reaktion der aktivierten Vorläufer miteinander und/oder mit dem aktivierten Vorformling.

2. Verfahren nach Anspruch 1, wobei die Überzugsschicht kovalent auf den Vorformling gepfropft wird.

3. Verfahren nach Anspruch 1 oder 2, wobei die Überzugschicht vernetzt wird, so dass die Schicht intakt bleibt, wenn der Vorformling gestreckt wird.

4. Verfahren nach einem der Ansprüche 1 bis 3, wobei der Vorformling ein thermoplastisches Material umfasst.

5. Verfahren nach Anspruch 4, wobei das thermoplastische Material eines oder mehrere, ausgewählt aus der Gruppe bestehend aus PET, PLA, PEF, PEN, PP und PE umfasst.

6. Verfahren nach einem der Ansprüche 1 bis 5, wobei die Überzugsschicht den Vorformling mit hydrophoben Eigenschaften versieht.

7. Verfahren nach Anspruch 6, wobei die hydrophoben Eigenschaften durch eine Überzugsschicht verliehen werden, die von einem ersten Vorläufer, umfassend Fluoracrylatmonomere, Fluoralkylacrylatmonomere, Fluormethacrylatmonomere, Fluoralkylmethacrylatmonomere, Fluorsilanmonomere oder eine Kombination oder Derivate davon, und einem zweiten Vorläufer, umfassend Cyclosiloxane, stammen.

8. Verfahren nach einem der vorstehenden Ansprüche, wobei die Überzugsschicht auf die gesamte Oberfläche des Vorformlings aufgebracht wird.

9. Verfahren zum Herstellen eines Behälters, wobei das Verfahren das Verfahren nach einem der Ansprüche 1 bis 8 gefolgt von einem Streckschritt umfasst.

10. Verwendung von Plasmaabscheidung unter Verwendung eines niedrig-energetischen, kalten Plasmas zum Implementieren des Verfahren nach einem der Ansprüche 1 bis 9, wobei das Plasma ein atmosphärisches Plasma ist, das hergestellt und bei einem Druck von zwischen 400 und 1600 hPa entladen wird, und wobei das Plasma unter Verwendung einer dielektrischen Barriereentladung für die Herstellung eines Behälters, umfassend eine Überzugschicht, erzeugt wird.

## Revendications

1. Méthode pour appliquer une couche de revêtement sur une préforme pour un récipient, laquelle méthode comprend les étapes consistant à :
a) fournir un plasma froid de faible énergie, dans laquelle le plasma est un plasma atmosphérique qui est créé et déchargé à une pression entre 400 et 1600 hPa, et dans laquelle le plasma est généré à l'aide d'une décharge à barrière diélectrique ;
b) exposer des précurseurs de revêtement et la préforme audit plasma, activant ainsi chimiquement les précurseurs, la préforme, ou les deux ;
c) déposer une couche de revêtement sur au moins une partie de la préforme par réaction des précurseurs activés les uns avec les autres et/ou avec la préforme activée.

2. Méthode selon la revendication 1, dans laquelle la couche de revêtement est greffée de manière covalente sur la préforme.

3. Méthode selon la revendication 1 ou 2, dans laquelle la couche de revêtement est réticulée, de telle sorte que la couche reste intacte lorsque la préforme est étirée.

4. Méthode selon l'une quelconque des revendications 1 à 3, dans laquelle la préforme comprend un matériau thermoplastique.

5. Méthode selon la revendication 4, dans laquelle le matériau thermoplastique comprend un ou plusieurs sélectionnés dans le groupe consistant en PET, PLA, PEF, PEN, PP et PE.

6. Méthode selon l'une quelconque des revendications 1 à 5, dans laquelle la couche de revêtement dote la préforme de propriétés hydrophobes.

7. Méthode selon la revendication 6, dans laquelle lesdites propriétés hydrophobes sont conférées par une couche de revêtement dérivée d'un premier précurseur comprenant des monomères de fluoroacrylate, des monomères d'acrylate de fluoroalkyle, des monomères de fluorométhacrylate, des monomères de méthacrylate de fluoroalkyle, des monomères de fluorosilane, ou une combinaison ou des dérivés de ceux-ci, et d'un second précurseur comprenant des cyclosiloxanes.

8. Méthode selon l'une quelconque des revendications précédentes dans laquelle la couche de revêtement est appliquée sur toute la surface de ladite préforme.

9. Méthode pour produire un récipient, laquelle méthode comprend la méthode selon l'une quelconque des revendications 1 à 8, suivie d'une étape d'étirage.

10. Utilisation d'un dépôt par plasma à l'aide d'un plasma froid de faible énergie mettant en œuvre la méthode selon l'une quelconque des revendications 1 à 9,
dans laquelle le plasma est un plasma atmosphérique qui est créé et déchargé à une pression entre 400 et 1600 hPa, et dans laquelle le plasma est généré à l'aide d'une décharge à barrière diélectrique, pour la production d'un récipient comprenant une couche de revêtement.
